Europäisches Patentamt

European Patent Office

Office européen des brevets

(11) Publication number: **0 206 315 B1**

# EUROPEAN PATENT SPECIFICATION

(45) Date of publication of patent specification: **31.07.91**  (51) Int. Cl.⁵: **C09C 1/50**

(21) Application number: **86108595.9**

(22) Date of filing: **24.06.86**

(54) Process and apparatus for producing carbon black.

(30) Priority: **24.06.85 US 748245**

(43) Date of publication of application:
**30.12.86 Bulletin 86/52**

(45) Publication of the grant of the patent:
**31.07.91 Bulletin 91/31**

(84) Designated Contracting States:
**AT BE CH DE FR GB IT LI LU NL SE**

(56) References cited:
**EP-A- 0 102 072**
**EP-A- 0 136 629**

(73) Proprietor: **Degussa Aktiengesellschaft
Weissfrauenstrasse 9
W-6000 Frankfurt am Main 1(DE)**

(72) Inventor: **Henderson, Eulas Webb
6100 S.E. King Drive
Bartlesville Oklahoma 74006(US)**
Inventor: **Gravley, Mark Lee
7416 S.E. Harned Place
Bartlesville Oklahoma 74006(US)**

(74) Representative: **Dost, Wolfgang, Dr.rer.nat.,
Dipl.-Chem. et al
Patent- und Rechtsanwälte Pagenberg-
Dost-Altenburg & Partner Galileiplatz 1
W-8000 München 80(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

Background of the Invention

In one aspect, the invention relates to the production of carbon black. In another aspect, the invention relates to a furnace which is especially well adapted for producing carbon black.

In furnace processes for the production of carbon black, a carbonaceous make oil is pyrolyzed with hot combustion gases formed by combusting a fuel, such as natural gas or residual oil with an oxidant, usually air. The carbon forming reaction occurs in a refractory lined tunnel which constitutes the bulk of the reactor. Different grades of carbon black are produced by manipulating the amount of fuel, oxidant and carbonaceous feed introduced into the reactor, the positions at which they are introduced, and the interior dimensions of the reactor tunnel. Reactors in which the properties of the carbon black produced can be relatively independently manipulated are very desirable. Reactors in which the production of undesired product, such as grit, is maintained at a low level are very desirable. Reactors characterized by a high degree of thermal efficiency are very desirable.

The applications EP-A 102 072 and EP-A 136 629 disclose carbon black furnaces having a combustion chamber, converging section, throat and pyrolysis chamber. Means are provided for introducing a feedstock into the conical section and throat of these reactors, however these means are not sufficient for achieving the desired control of the carbon black properties as intended in the present invention.

EP-A 184 819 relates to an air distributor for a carbon black reactor in which incoming combustion air is diverted in an upstream direction to achieve better air distribution. The problems of achieving variously desired properties of the product carbon black are not discussed.

Objects of the Invention

It is an object of this invention to provide an apparatus and process for producing carbon black in which the properties of the carbon black are easily controlled by manipulating input parameters.

It is another object of this invention to provide an apparatus and process for the production of carbon black having low levels of grit contaminant.

It is a further object of this invention to provide and apparatus for the production of carbon black on which the reactants come together to produce carbon black in a highly efficient manner.

It is yet another object of this invention to provide an apparatus and process for producing carbon black in which the tint of the carbon black is easily controlled.

According to the present invention a carbon black reactor is provided comprising a generally cylindrical combustion zone. a converging zone; and a reactor throat as defined in Claim 1. The converging zone connects the generally cylindrical combustion zone with the reactor throat. A generally cylindrical pyrolysis zone is situated downstream of the reactor throat, said pyrolysis zone having a diameter in the range of 1.5 to 5 times the diameter of the reactor throat; the combustion zone, the converging zone, the throat and the pyrolysis zone being determined by a sidewall defining a reaction flow passage having a longitudinal axis to the reactor. There is at least one generally annular wall positioned between the reactor throat and the pyrolysis zone, said generally annular wall facing in the downstream direction. The reactor includes means for providing hot combustion gases which flow from the generally cylindrical combustion zone to the generally cylindrical pyrolysis zone. At the downstream end of the generally cylindrical pyrolysis zone are means for introducing a quench fluid. A plurality of ports extend generally radially inwardly towards the longituginal axis of the reactor for the insertion of feedstrock injectors, there being at least one of these ports in the converging zone; at least one in the throat and at least one in the pyrolysis zone.

The invention is also directed to a process for producing carbon black as claimed in the accompanying Claims 11 to 18.

Brief Description of the Drawing

FIGURE 1 is a side cross sectional representation of carbon black reactor embodying certain features of the present invention.

FIGURE 2 represents a cross sectional view of the reactor of FIGURE 1 as would appear when viewed along lines 2-2.

FIGURE 3 represents a cross sectional view of the reactor of FIGURE 1 as would appear when viewed along lines 3-3.

Detailed Description of the Invention

According to certain aspects of the invention, a carbon black reactor designated generally by the reference numeral 2 is formed to a large extent by refractory sections 3, 4, 5, 6, 7, 8, 9 and 10 which form a sidewall which defines the reaction flow path 13 through the reactor 2.

The reaction flow path through the reactor 2 is symmetric about a longitudinal axis 11 of the reactor 2.

The tunnel or flow path 13 has the following zones in sequential, general axial alignment. A first generally cylindrical zone 12 has a first end 14 and a second end 16. A converging zone 15 has a first end 18 connected to the second end 16 of the zone 12, and a second end 20. A reactor throat 22 has a first end 24 connected to the second end 20 of the converging zone 15 and a second end 26. A generally cylindrical pyrolysis zone 34 has a first end 36 connected to the second end 26 of the choke 22, and a second end 38. The second end 38 of the zone 34 is determined by the position of a means 40 for introducing a quench fluid into the zone 34, which serves as the pyrolysis zone for the reactor. A generally annular wall 42 is positioned between the reactor throat 22 and the pyrolysis zone 34. The generally annular wall 42 faces in the downstream direction and forms the upstream end of the pyrolyis zone. The pyrolysis zone 34 will generally have a diameter in the range of from 1.5 to 5 times the diameter of the reactor throat 22 at its narrowest point. The reactor further comprises a means designated generally by the numeral 41 for establishing a generally axial flow of hot combustion gases which flow from the first generally cylindrical combustion zone 12 to the generally cylindrical pyrolysis zone 34 and means designated generally by the reference numeral 44 for introducing a carbonaceous feedstock generally radially inwardly into the hot combustion gases at spaced apart longitudinal positions along the reaction flow path.

In one embodiment, the means 41 has an air plenum 46 which can be radial with respect to the reactor axis and a fuel tube 48 which can be along the reactor axis. The air plenum 46 is connected to an oxidizing gas source 50 which has preferably been preheated such as by indirect heat exchange with reactor tail gases. The fuel tube 48 is connected with a suitable source of fuel 52 such as natural gas. A plate 54 which can be circular seals the end of the fuel tube 48 and forms a flange, which can be annular, with respect to the tube 48, the downstream face of which acts as a flame holder. Fuel is emitted from the tube 48 through apertures 56 located near flange 54. Refractory section 3 is cast in the form of a choke which can have a frustoconical converging inside surface leading to the upstream end of the refractory section 4. The upstream end 14 of the generally cylindrical combustion zone 12 is in the shape of an annular wall which also serves as a flame holder.

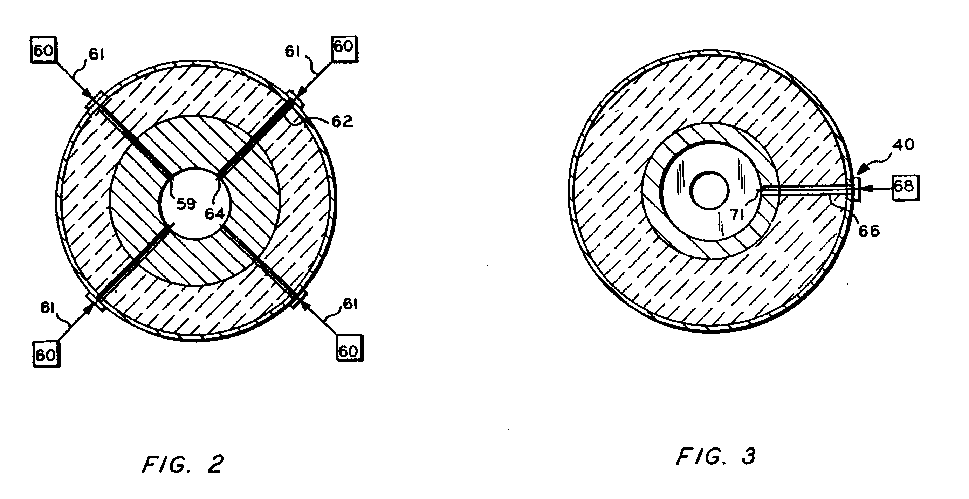

The means 44 for introducing the carbonaceous feedstock into the reactor flow path generally comprises a plurality of ports 59 opening into the flow passage generally radially inwardly through the side wall of the reactor at longitudinally spaced apart positions with respect to the longitudinal axis 11 of the reactor. A plurality of feedstock injectors illustrated by reference 62 in FIGURE 2 are positioned in at least a portion of said ports 59. The feedstock injectors 62 are connected to sources 60 of carbonaceous feedstock and a conduit means 61 connects the sources 60 to carbonaceous feedstock with the injectors 62. Each injector 62 can be terminated in any desired manner which results in introduction of the feedstock with sufficient penetration to clear the wall but insufficient penetration to result in liquid impingement on the opposite wall so as to cause coke buildup. For example, the injector 62 can be terminated so as to emit coherent jets of feedstock, or sprays of feedstock having a cone shaped spray pattern or, atomizing bifluid nozzles can be used which emit a mist or fog of atomized oil and steam or other light gas. Preferably, the injectors are terminated so as to emit sprays of feedstock having a cone shaped spray pattern where the cone diverges at an included angle in the range of from 30° to 120°, since using nozzle tips which emits such sprays has provided good results. Nozzle tips are represented by numeral 64 in the drawing.

In accordance with the the invention, the ports 59 are arranged in a first set 63 at a first longitudinal position with respect to the reactor axis, a second set 65 at second longitudinal position with respect to the reactor axis, and a third set 67 at a third longitudinal position with respect to the reactor axis 11. The first set of ports 63 when in a plurality are preferably circumferentially spaced apart around and open into the reactor flow passage in the converging zone 15. The second set of ports 65 when in a plurality are preferably circumferentially spaced apart around and open into the reaction flow passage in the reactor throat 22. The third set of ports 67 when in a plurality are preferably circumferentially spaced apart and open into the reaction flow passage through the wall of the pyrolysis zone 34. In a preferred embodiment of the invention, a fourth set of ports 69 is provided at fourth longitudinal position with respect to the reactor axis 11 opening into the converging zone 15 and positioned upstream from the first set of ports 63. When in a plurality, the ports of the fourth set 69 are preferably circumferentially spaced apart. Any desired number of circumferentially spaced apart ports can be used in forming a set 63, 65, 67 or 69. For convenience, the number of ports will generally be between 1 and 16 in each set. Preferably, each set is formed by in the range of from 1 to 6 ports 59 since good results can be achieved with a small number of ports and injectors positioned in a portion of them.

In accordance with the invention, feedstock is introduced simultaneously through injectors positioned in different sets of ports. The process (claim 11) of the present invention, however, excludes the feedstock being introduced through ports at said first and second locations as the sole feedstock source. At least one injector 62 will be positioned in a port 59 of a set in use. Preferably, injectors 62 will be positioned in at least three different sets of ports for simultaneous feedstock injection. For example, at least one feedstock injector 62 could be positioned in a port 59 of set 69 and one each in ports 59 of set 65 and set 67. As another example a feedstock injector 62 could be positioned in a port 59 of set 63, a port 59 of set 65 and a port 59 of set 67.

Generally speaking, a set 67 of ports 59 in the pyrolysis zone will be positioned within about 4 reactor throat diameters, usually within 2 reactor throat diameters, at its narrowest point, from the upstream end 36 of the pyrolysis zone 34. Generally, no more than about 6 reactor throat diameters, as measured at its narrowest point, will separate the most upstream set 69 of ports 59 from the most downstream set 67 of ports 59. Usually, the distance separating the most upstream set from the most downstream set when the invention is utilized will be in the range of from 2 to 6 reactor throat diameters, preferably in the range of 3 to 6 reactor throat diameters.

Usually, the source 60 carbonaceous feedstock will comprise a storage tank, a pump capable of generating a pressure of at least 0.34 MPa (50 psig), usually in the range of from 0.69 to 3.4 MPa (100 to 500 psig), and a heater for preheating the carbonaceous feedstock to a temperature in the range of from $93^\circ$ C to $315^\circ$ C ($200^\circ$ F to $600^\circ$ F). The spray nozzle 64 mounted on the ends of tubes 62 are preferably removable and easily changeable to provide an additional parameter (spray type) which can be manipulated to influence product properties. Carbonaceous feedstock pressure and/or nozzle orifice size are adjusted so that the feedstock emitted from the injector does not impinge on the opposite wall.

The means 40 for introducing quench fluid into the pyrolysis zone generally comprises a tubular member 66 extending through the sidewall which defines the pyrolysis zone 34 usually in a generally radially inward direction. The tubular member 66 is connected to a suitable source 68 of quench fluid, usually water since it is convenient and effective. Where water is used as a quench fluid, the tube 66 will generally be provided with a spray nozzle 69 at its outlet end having an orifice size and a spray angle sufficient to cool the effluent in the pyrolysis zone to below carbon forming temperatures without excessive impingement on the far wall of the reactor.

Although the size of the reactor throat is not critical in the present invention, commercial sized reactors constructed in accordance with the present invention will usually have a throat 22 diameter in the range of from 10cm to 41cm (4 inches to 16 inches), usually between 13cm to 25cm (5 inches and 10 inches) at the narrowest point. The size of the throat will be related to the capacity of the air source 50. Generally, a relationship between the throat 22 and the means 50 will be such that that hourly volume of hot combustion gases at a 50 percent excess air rate (150% of the amount required for stoichiometric combustion of the fuel) as measured at standard temperature and pressure conditions (SCFH) will be between about 10,000 $r^{2.3}$ and about 14,000 $r^{2.3}$, where r is the radius of the reactor throat 22 in inches. Sufficient oil is introduced via means 44 so as to maintain an air/oil ratio in the range of 1.50 to 6.0 $m^3/\ell$ (200 to 800 SCF/gal,), depending on the desired product. The generally cylindrical zone 12 will generally have a diameter in the range of from 2 to 5 throat diameters, usually between 2.5 and 3.5 throat diameters. It is preferred that the diameter of the zone 12 be toward the larger end of the described ranges where a liquid fuel is to be used. The length of the generally cylindrical zone 12 should be sufficient to provide for the desired degree of combustion of the fuel used with the oxidant gas. Usually, the zone 12 will have a length of at least 2 times the throat diameter, preferably in the range of from 2 to 10 times the throat diameter.

The converging zone 15 is preferably formed from a frustoconical reactor section having an included cone angle in the range of from about $30^\circ$ to about $90^\circ$, preferably from about $45^\circ$ to about $80^\circ$. The length of the converging section 15 is, of course, dependent upon the included cone angle and the respective diameters of the zones 12 and 22 but will generally be in the range of from about 2 to about 10 throat diameters.

The throat 22 will generally have a length in the range of 0.3 to 3 throat diameters.

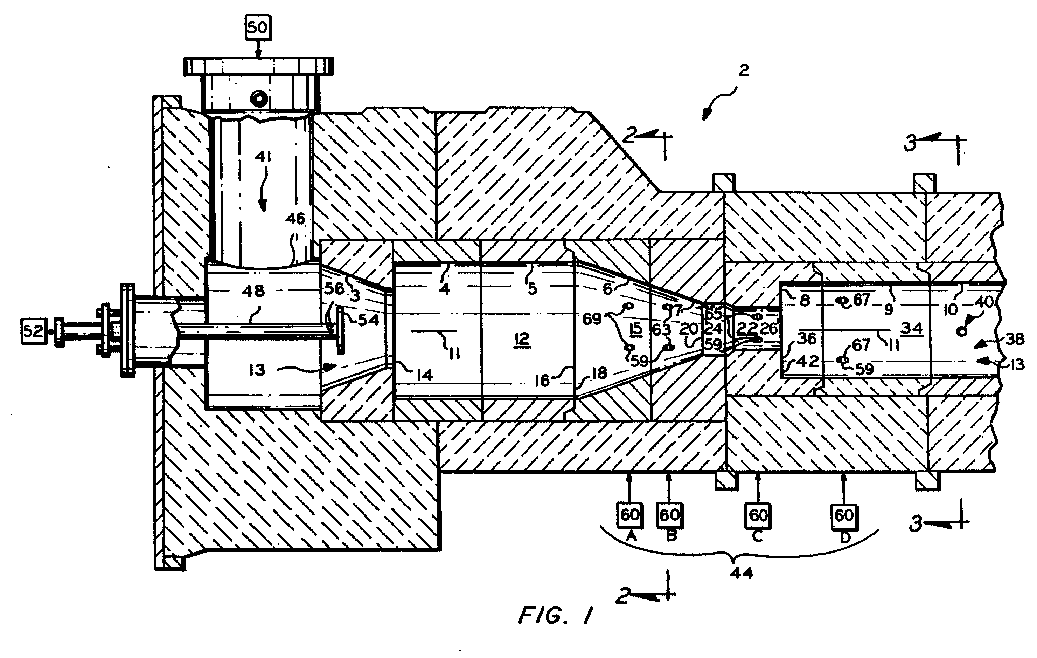

The zone 34 generally has a diameter in the range of from 1.5 to 5 throat diameters, usually in the range of from 2 to 4 throat diameters. The reactor refractory can be cast in sections along the lines as generally indicated in the FIGURE 1 and separated with expansion paper as is known to those in the art. The reactor tunnel can be lined with chrome alumina refractory at its upstream end around the zones 12 and 15 as well as for the downstream portions of the zone 34. The throat 22 and upstream end of the zone 34 can be formed from a high alumina rammable refractory such as Jade Pak 88P available from A. P.

Green. The refractory surrounding the air plenum and fuel inlet of the upstream end of the reactor can be formed from Kaokast refractory available from Babcock and Wilcox and Purotab refractory which is higher alumina content than Kaokast can be used to insulate the tunnel liner. 1.27 cm (One-half inch) thick steel can be used for the reactor shell.

EXAMPLE

A carbon black reactor according to the invention has dimensions shown in Table I.

<div align="center">

Table I

cm (Inches)

</div>

**Cylindrical Zone 12**
| | |
|---|---|
| Diameter | 53(21) |
| Length | 68(26.75) |

**Converging Zone 15**
| | |
|---|---|
| Diameter adjacent zone 12 | 53(21) |
| Diameter adjacent zone 22 | 20 (8) |
| Length | 47(18.5) |

**Throat Zone 22**
| | |
|---|---|
| Diameter, Inlet | 20 (8) |
| Length | 30(12) |
| Diameter, Outlet | 18 (7) |

**Cylindrical Zone 34**
| | |
|---|---|
| Diameter | 38(15) |
| Length (to quench position 40) | 152(60+) |

Four sets of radial oil injection nozzle ports were provided on the above reactor. On the inventive reactor set of ports were located 61 cm (24 inches) upstream from throat outlet (set 69 in FIGURE 1), hereinafter "A"; 41 cm (16 inches) upstream from throat outlet (set 63 in FIGURE 1), hereinafter "B"; 7.6 cm (3 inches) upstream from throat outlet (set 65 in FIGURE 1), hereinafter "C"; and 35 cm (13 11/16 inches) downstream from throat outlet (set 67 in FIGURE 1), hereinafter "D".

Oil nozzle spray angle was kept between 45° and 100°, and oil nozzle pressure was kept between 1.0 and 1.65 MPa (140 and 240 psig).

Oil quality was:

| | |
|---|---|
| BMCI (correlation index) | 131 |
| °API gravity (ASTM D 287) | -1.3 |
| Wt % C | 89.6 |
| Wt % H | 7.5 |
| Wt % S | 2.7 |
| Vis @ 210°F (ASTM D 88) SSU | 44 |

Air rate, quench position, heat input, nozzle spray angle, and percent oil at different positions were changed in an attempt to maximize modulus results while maintaining the necessary CTAB, C-DBP, and tint residual values. Air rate, quench position, and heat input were found to have very little effect on modulus. Increasing the oil nozzle spray angle from 45° to 100° reduced modulus values. The maximum modulus was found when operating with all the oil injected at B position, but this condition also gave tint values too high for N-347. It became apparent that compromises were necessary. The properties and corrected values for this series of tests are shown in Table II.

<div align="center">5</div>

Some things have become apparent as far as N-347 production are concerned.

1. Some oil has to be injected at A or D to reduce the tint sufficiently.

2. No more than 25% of the oil can be injected at D or 325 mesh grit values begin increasing above 100 ppm.

3. For low structure carbon blacks (e.g. N-326) it is very difficult to get enough $KNO_3$ into the reactor if position A is used.

With this in mind and with the information in Table II, it appears the best conditions for producing N-347 is with some combination of oil nozzles at A, B, C, or C-D with A-C-D locations being of secondary importance. Referring to the corrected values in Table II the following conclusions can be drawn. When operating with all oil injected at B position the tint is too high for N-347. When operating with all oil injected in B and C positions the tint is also too high. Injecting oil at A, B, C and D positions simultaneously produces modulus too low. Injecting oil at B-D and A-D gives low modulus. Injecting oil at A-C-D produces tint just on the borderline of being too high. If the A, B, C positions are used at the same time the highest percentage of oil should be injected at B to keep modulus high.

## Table II
## N-347 Properties

Average Values
Loose Black Values

| Oil Position Used | B | B-C | A-B-C | A-B-C-D | B-D | C-D | A-C-D | AD |
|---|---|---|---|---|---|---|---|---|
| Number of Tests | 12 | 17 | 10 | 8 | 5 | 3 | 2 | 1 |
| CTAB, $m^2$/g (ASTM D 3765-80) | 91.5 | 87.6 | 87.8 | 81.6 | 92.8 | 89.2 | 86 | 86.9 |
| 24M4 DBP,cc/100 g (ASTM D 3493-76) | 87.5 | 87.9 | 93.6 | 93.9 | 89.0 | 86.2 | 83 | 99.2 |
| Tint % TTRB (ASTM D 3265-76) | 112.5 | 108.6 | 103.6 | 100.7 | 106.8 | 107 | 107.2 | 97.3 |
| Tint Residual[a] | 5.6 | 4.2 | 0.4 | 1.3 | -0.3 | 1.1 | 2.2 | -4.3 |
| 300% Modulus 30' IRB #5 mPa (ASTM D 412-75) | 0.20 | -0.15 | 0.30 | -0.1 | -1.0 | -0.2 | 0.2 | 0.8 |
| Rebound 40' (diff. in % rebound) (ASTM D 1054) | -2.3 | -0.7 | -0.9 | -0.6 | -0.7 | -0.2 | 0.6 | 0.6 |
| Yield kg/l (lb/gal) | 0.663 (5.529) | 0.656 (5.466) | 0.632 (5.265) | 0.672 (5.604) | 0.661 (5.509) | 0.694 (5.785) | 0.700 (5.83) | N/A |

Values Corrected to Common CTAB, 24M4

| | B | B-C | A-B-C | A-B-C-D | B-D | C-D | A-C-D | AD |
|---|---|---|---|---|---|---|---|---|
| Tint @ 89 $m^2$/g (CTAB), 99 cc/100g (24M4) | 109 | 107 | 102 | 103 | 103 | 104 | 105 | 98 |
| 300% Modulus 89 $m^2$/g (CTAB), 99 cc/g(24M4) | 1.8 | 1.1 | 0.9 | -0.1 | 0.6 | 1.4 | 1.9 | 0.6 |
| Rebound | -2.5 | -1.5 | -1.4 | -2.2 | -0.6 | -0.8 | -0.9 | ^.1 |
| Yield @ 89 $m^2$/g (CTAB) | 5.589 | 5.432 | 5.236 | 5.427 | 5.600 | 5.790 | 5.795 | N/.. |

[a]Tint Residual = Measured Tint-[56.0+1.057(CTAB)-0.002745(-CTAB)$^2$-0.2596(DBP)-0.201($N_2$SA-CTAB)]

In Table III, use of a reactor as described earlier in this example for the production of N-326 carbon black is illustrated.

## Table III

| | Test Run N-326 |
|---|---|
| Air Rate $m^3$/h (SCFH) | 5076 (179372) |
| Gas Rate $m^3$/h (SCFH) | 325 (11503) |
| Oil Rate $m^3$/h (GPA) | 1.64 (432) |
| % Oil @ A | 0 |
| % Oil @ B | 40 |
| % Oil @ C | 40 |
| % Oil @ D | 20 |
| Prequench Rate | 0 |
| Primary Quench Rate $m^3$/h (GPH) | 1.82 (482) |
| Quech Location m (inches) | 4.32 (170) |
| $KNO_3$ (8%) Rate (ccpm) | 141 |
| Air Temperature $^{o}$C ($^{o}$F) | 657 (1215) |
| Heat Input joules/$\ell$ (BTU/SCF) | 3056 (82) |
| Yield kg/$\ell$ (lb/gal) | 0.682 (5.683) |
| Reactor Pressure kPa (psig) | 23.1 (3.35) |
| Oil Nozzle Pressure MPa (psig) | 1.05 (152) |
| Toluene discoloration | 87 |
| $I_2$ Surface Area | 84 |
| CTAB Surface Area | 83.1 |
| Normal DBP | 81.8 |
| 24M4 DBP | 69.2 |
| Tint | 108.7 |
| Tint Residual | 1.8 |

Table IV illustrates derived relationships between certain input parameters and carbon black product properties.

## Table IV

### Reactor Regression Equations

__300% Modulus 30', $^{\Delta}$ NR 900__

Mod ASTM D 412-75 = -286.3-3.381 * NA - 4.2885 * ORA + 0.0413 * ORB - 0.6819 * ORC - 3.1177 * ORD - 12.4863 * C + 17.8926 * PS

$R^2$ = .64 Root (§) MSE = 136      Mean = -59.69

Tint ASTM 3625   = 86.2347 - 0.0458 * NA - 0.0985 * ORA + 0.0383 * ORB + 0.0147 * ORC - 0.0870 * ORD + 0.4564 * C - 0.2029 * PS

$R^2$ = .911 Root MSE = 1.95      Mean = 107.53

8

TR (previously defined) = 4.1627 - 0.0399 * NA - 0.0544 * ORA + 0.0647 ORB + 0.0433 * ORC - 0.0576 * ORD - 0.0599 * C + 0.0228 * PS

$R^2$ = .646 Root MSE = 2.03     Mean = 2.52

RB (previously defined) = 17.93 + 1.205 * $10^{-5}$ * AR - 0.0105 * QP - 0.0139 * NA - 0.0017 * ORA - 0.0085 * ORB - 0.00015 * ORC + 0.0170 * ORD - 0.1588 * C - 0.0588 * PS

$R^2$ = .647 Root MSE = 1.10     Mean = -1.21

Y =                     7.006 - 0.0047 * NA + 0.0202 * HI - 0.162 * ORA - 0.0077 * ORB - 0.0089 * ORC - 0.0041 * ORD - 0.02395 * C

$R^2$ = .643 Root MSE = 0.18     Mean = 5.453

An explanation of the variables used in Table IV is given in the following Table.

Table V

DP = Data Point

AR = Air Rate $m^3$/h (SCFH 5094-6509 (180,000-230,000)

QP = Quench Position m(inches) past choke when reaction is
first quenched 0-4.32 (0"-170")

NA = Nozzle Angle (45°-100°)

HI = Heat Input joules/ℓ (BTU/SCF) 2760-3130 (74-84)

ORA = Percent of total Oil at 'A' Position (0-50%)

ORB = Percent of total Oil at 'B' Position (0-100%)

ORC = Percent of total Oil at 'C' Position (0-85%)

ORD = Percent of total Oil at 'D' Position (0-5-%)

C = CTAB (ASTM D 3765-80) $m^2$/g 76-114

PS = 24M4 DBP ASTM D3493-76 cc/100g 69-101

T = Tint ASTM D 3265-75 (97-122)

TR = Tint Residual (-6 to 8.4)

Mod. = 300% NR 900 30' Modulus ∆ IRB # 5 (-640 to + 400 units)
(ASTM D 412-75)

RB = Rebound 40' ASTM D 1054 (-6.9 to + 2.2)

CC = $KNO_3$ Flow Rate (ccpm) 8%

Y = Yield kg/ (lb/gal) 0.557 to 0.719 (4.645 to 5.989)

Claims

1. A carbon black reactor comprising:
a generally cylindrical combustion zone (12);
a converging zone (15);
a reactor throat (22);
the converging zone connecting the generally cylindrical combustion zone with the reactor throat;

a generally cylindrical pyrolysis zone (34) downstream of the reactor throat, said pyrolysis zone having a diameter in the range of from 1.5 to 5 times the diameter of the reactor throat;

the combustion zone, the converging zone, the throat and the pyrolysis zone being determined by a sidewall defining a reaction flow passage having a longitudinal axis (11) to the reactor;

at least one generally annular wall (42) positioned between the reactor throat and the pyrolysis zone, said generally annular wall facing in the downstream direction;

a means (41) for providing hot combustion gases which flow from the generally cylindrical combustion zone to the generally cylindrical pyrolysis zone;

a means (40) for introducing a quench fluid at the downstream end of the generally cylindrical pyrolysis zone;

a plurality of ports (59) extending generally radially inwardly towards the longitudinal axis of the reactor for the insertion of feedstock injectors;

**characterized by**

at least one port (59) being in the converging zone (15);
at least one port (59) being in the throat (22) and
at least one port (59) being in the pyrolysis zone (34).

2. A reactor as claimed in Claim 1 and comprising:

a first set of said ports (59) circumferentially spaced in the converging zone (15) at a first longitudinal position with respect to the longitudinal axis of the reactor;

a second set of said ports (59) circumferentially spaced in the reactor throat (22) at a second longitudinal position with respect to the longitudinal axis of the reactor; and

a third set of said ports (59) circumferentially spaced in the pyrolysis zone (34) at a third longitudinal position with respect to the longitudinal axis of the reactor.

3. A reactor as claimed in Claim 2 and wherein said third longitudinal position is at a distance of about 4 throat diameters from said generally annular wall (42).

4. A reactor as claimed in Claim 2 or Claim 3 and comprising a fourth set of said ports (59) circumferentially spaced at a fourth longitudinal position with respect to the longitudinal axis of the reactor, said fourth set of ports (59) being in the converging zone (15) upstream from said first set of ports (59).

5. A reactor as claimed in Claim 4 wherein the distance separating the fourth set of ports from the third set of ports is no greater than about six reactor throat diameters.

6. A reactor as claimed in Claim 5 wherein the distance separating the fourth set of ports from the third set of ports is in the range of three to six reactor throat diameters.

7. A reactor as claimed in any one of Claims 2 to 6 including at least one feedstock injector (62) in a port (59) at each of at least two of said longitudinal positions;

a source of carbonaceous feedstock; and

conduit means connecting said source of carbonaceous feedstock with said feedstock injectors.

8. A reactor as claimed in Claim 7 wherein each feedstock injector has means for emitting a coherent jet of feedstock.

9. A reactor as claimed in Claim 7 wherein each feedstock injector has means for emitting a spray of feedstock in a cone shaped pattern.

10. A reactor as claimed in Claim 9 wherein each feedstock injector has means whereby said cone shaped pattern has an included angle in the range of $30°$ to $120°$.

11. A process for producing carbon black wherein hot combustion gases are formed in the combustion zone (12) of the reactor claimed in one of Claims 2 to 10;

flowing said hot combustion gases from said combustion zone (12) through said converging zone (15) and said reactor throat (22) into said pyrolysis zone (34);

and introducing a carbonaceous feedstock into the hot combustion gases by means of feedstock injectors (62) selectively positioned by means of said ports (59), at at least two of said longitudinal positions.

with the proviso that the feedstock shall not be introduced through ports at said first and second locations as the sole feedstock source.

12. A process in accordance with Claim 11 wherein said feedstock is introduced through feedstock injectors in ports at said second and at said third longitudinal position.

13. Process in accordance with Claim 11 or 12 wherein said feedstock is introduced through feedstock injectors in ports at said first and at said third longitudinal positions.

14. Process in accordance with Claim 11 using an apparatus in accordance with Claim 4 or one of the claims referring to Claim 4, wherein said feedstock is introduced through feedstock injectors in ports at said fourth, first and second longitudinal positions.

15. Process in accordance with Claim 11 using an apparatus in accordance with Claim 4 or one of the claims referring to Claim 4, wherein said feedstock is introduced through feedstock injectors in ports at said fourth, second and third longitudinal positions.

16. A process according to one of Claims 11 to 15 wherein the carbonaceous feedstock is sprayed into at least one of the two longitudinal positions in the converging zone and at least one of the reactor throat and the pyrolysis zone.

17. A process according to one of claims 11 to 15 wherein the carbonaceous feedstock is sprayed generally radially inwardly into the hot combustion gases from the side wall following each of the converging zone, the reactor zone and the pyrolysis zone.

18. A process as claimed in one of Claims 11 to 17 wherein feedstock is introduced into the hot combustion gases over a longitudinal distance in the range of from 2 to 6 reactor throat diameters.

**Revendications**

1. Réacteur de noir de carbone comprenant :
   - une zone de combustion généralement cylindrique (12);
   - une zone convergente (15);
   - un col de réacteur (22);
     la zone convergente reliant la zone de combustion généralement cylindrique au col du réacteur;
   - une zone de pyrolyse généralement cylindrique (34) en aval du col du réacteur, ladite zone de pyrolyse ayant un diamètre compris dans la gamme de 1,5 à 5 fois le diamètre du col du réacteur;
   - la zone de combustion, la zone convergente, le col et la zone de pyrolyse étant déterminés par une paroi latérale définissant un passage pour l'écoulement de la réaction ayant un axe longitudinal (11) par rapport au réacteur;
   - au moins une paroi généralement annulaire (42) placée entre le col du réacteur et la zone de pyrolyse, ladite paroi généralement annulaire étant dirigée dans le sens aval;
   - un moyen (41) pour fournir des gaz de combustion chauds qui s'écoulent entre la zone de combustion généralement cylindrique et la zone de pyrolyse généralement cylindrique;
   - un moyen (40) pour introduire un fluide de refroidissement à l'extrémité aval de la zone de pyrolyse généralement cylindrique;
   - une multitude de lumières (59) s'étendant dans le sens général radial de l'intérieur dans la direction de l'axe longitudinal du réacteur pour l'insertion d'injecteurs de matière d'alimentation; caractérisé en ce que :
   - au moins une lumière (59) se trouve dans la zone convergente (15);

12

- au moins une lumière (59) se trouve dans le col (22) et
- au moins une lumière (59) est située dans la zone de pyrolyse (34).

2. Réacteur selon la revendication 1, et comprenant :
   - un premier jeu desdites lumières (59) espacées circonférentiellement les unes des autres dans la zone convergente (15) à une première position longitudinale par rapport à l'axe longitudinal du réacteur;
   - un second jeu desdites lumières (59) espacées circonférentiellement les unes des autres dans le col (22) du réacteur à une seconde position longitudinale par rapport à l'axe longitudinal du réacteur; et
   - un troisième jeu desdites lumières (59) espacées circonférentiellement les unes des autres dans la zone de pyrolyse (34) à une troisième position longitudinale par rapport à l'axe longitudinal du réacteur.

3. Réacteur selon la revendication 2 et dans lequel la troisième position longitudinale se trouve à une distance d'environ 4 diamètres de col par rapport à ladite paroi généralement annulaire (42).

4. Réacteur selon la revendication 2 ou la revendication 3 et comprenant un quatrième jeu desdites lumières (59) espacées circonférentiellement les unes des autres à une quatrième position longitudinale par rapport à l'axe longitudinal du réacteur, ledit quatrième jeu de lumières (59) se trouvant dans la zone convergente (15) en amont dudit premier jeu de lumières (59).

5. Réacteur selon la revendication 4, dans lequel la distance séparant le quatrième jeu de lumières du troisième jeu de lumières n'est pas supérieure à environ six diamètres du col du réacteur.

6. Réacteur selon la revendication 5, dans lequel la distance séparant le quatrième jeu de lumières du troisième jeu de lumières est comprise dans la plage de trois à six diamètres du col du réacteur.

7. Réacteur selon l'une quelconque des revendications 2 à 6, comprenant au moins un injecteur (62) de matière d'alimentation dans une lumière (59) à chacune d'au moins deux desdites positions longitudinales;
   - une source de matière carbonée d'alimentation; et
   - un moyen de conduit reliant ladite source de matière carbonée d'alimentation aux injecteurs de matière d'alimentation.

8. Réacteur selon la revendication 7, dans lequel chaque injecteur de matière d'alimentation comporte un moyen pour émettre un jet cohérent de matière d'alimentation.

9. Réacteur selon la revendication 7, dans lequel chaque injecteur de matière d'alimentation comporte un moyen pour émettre une projection de matière d'alimentation dans un diagramme en forme de cône.

10. Réacteur selon la revendication 9, dans lequel chaque injecteur de matière d'alimentation comporte un moyen, grâce auquel le diagramme en forme de cône présente un angle inclus dans la gamme allant de 30° à 120°.

11. Procédé pour la fabrication de noir de carbone, dans lequel des gaz de combustion chauds sont formés dans la zone de combustion (12) du réacteur tel que revendiqué dans l'une des revendications 2 à 10; avec :
    - la circulation desdits gaz de combustion chauds à partir de ladite zone de combustion (12) par l'intermédiaire de ladite zone convergente (15) et dudit col (22) du réacteur pour les introduire dans ladite zone de pyrolyse (34);
    - et l'introduction d'une matière carbonée d'alimentation dans les gaz de combustion chauds au moyen d'injecteurs (62) de matière d'alimentation qui sont sélectivement positionnés au moyen desdites lumières (59), à au moins deux desdites positions longitudinales,
    - dans la mesure où la matière d'alimentation ne sera pas introduite par l'intermédiaire des lumières auxdits premier et second emplacements comme seule source de matière d'alimentation.

13

12. Procédé selon la revendication 11, dans lequel ladite matière d'alimentation est introduite par l'intermédiaire d'injecteurs d'alimentation dans des lumières à ladite seconde et à ladite troisième position longitudinale.

13. Procédé selon la revendication 11 ou 12, dans lequel ladite matière d'alimentation est introduite par l'intermédiaire d'injecteurs de matière d'alimentation dans des lumières à ladite première et à ladite troisième positions longitudinale.

14. Procédé selon la revendication 11, utilisant un dispositif selon la revendication 4 ou l'une des revendications dépendant de la revendication 4, dans lequel ladite matière d'alimentation est introduite par l'intermédiaire d'injecteurs de matière d'alimentation dans des lumières auxdites quatrième, première et seconde positions longitudinales.

15. Procédé selon la revendication 11 utilisant un dispositif selon la revendication 4 ou l'une des revendications dépendant de la revendication 4, dans lequel ladite matière d'alimentation est introduite par l'intermédiaire d'injecteurs de matière d'alimentation dans des lumières auxdites quatrième, seconde et troisième positions longitudinales.

16. Procédé selon l'une des revendications 11 à 15, dans lequel la matière carbonée d'alimentation est projetée dans au moins l'une des deux positions longitudinales dans la zone convergente et dans au moins le col du réacteur ou la zone de pyrolyse.

17. Procédé selon l'une des revendications 11 à 15, dans lequel la matière carbonée d'alimentation est projetée dans le sens général radial de l'intérieur pour l'introduire dans les gaz de combustion chauds à partir de la paroi latérale suivant la zone convergente, la zone du réacteur et la zone de pyrolyse.

18. Procédé selon l'une des revendications 11 à 17, dans lequel la matière d'alimentation est introduite dans les gaz de combustion chauds sur une distance longitudinale comprisé dans la gamme allant de 2 à 6 diamètres du col du réacteur.

**Patentansprüche**

1. Russreaktor, umfassend:
eine im allgemeinen zylindrische Verbrennungszone (12);
eine konvergierende Zone (15);
einen Reaktorhals (22);
  wobei die konvergierende Zone die im allgemeinen zylindrische Verbrennungszone mit dem Reaktorhals verbindet;
  eine im allgemeinen zylindrische Pyrolysezone (34) stromabwärts vom Reaktorhals, wobei die Pyrolysezone einen Durchmesser im Bereich des 1,5- bis 5-fachen des Durchmessers des Reaktorhalses aufweist;
  wobei die Verbrennungszone, die konvergierende Zone, der Hals und die Pyrolysezone durch eine Seitenwand festgelegt werden, die einen Reaktionsstromdurchgang mit einer zum Reaktor longitudinalen Achse (11) definiert;
  wobei mindestens eine im allgemeinen ringförmige Wand (42) zwischen dem Reaktorhals und der Pyrolysezone angeordnet ist, wobei diese im allgemeinen ringförmige Wand in Stromabwärts-Richtung gerichtet ist;
  eine Einrichtung (41) zur Bereitstellung von heissen Verbrennungsgasen, die aus der im allgemeinen zylindrischen Verbrennungszone in die im allgemeinen zylindrische Pyrolysezone strömen;
  eine Einrichtung (40) zur Zufuhr eines Abschreckfluids am stromabwärts gelegenen Ende der im allgemeinen zylindrischen Pyrolysezone;
  eine Mehrzahl von Öffnungen (59), die sich im allgemeinen in radialer Richtung nach innen zur longitudinalen Achse des Reaktors erstrecken und zum Einsetzen von Einsatzmaterial-Injektionsvorrichtungen bestimmt sind;
  dadurch gekennzeichnet, dass
  mindestens eine Öffnung (59) sich in der konvergierenden Zone (15) befindet;
  mindestens eine Öffnung (59) sich im Hals (22) befindet und
  mindestens eine Öffnung (59) sich in der Pyrolysezone (34) befindet.

2. Reaktor nach Anspruch 1, umfassend

einen ersten Satz von Öffnungen (59), die in Umfangsrichtung im Abstand voneinander in der konvergierenden Zone (15) in einer ersten longitudinalen Position in Bezug auf die longitudinale Achse des Reaktors angeordnet sind;

einen zweiten Satz von Öffnungen (59), die in Umfangrichtung im Abstand voneinander im Reaktorhals (22) in einer zweiten longitudinalen Position in Bezug auf die longitudinale Achse des Reaktors angeordnet sind; und

einen dritten Satz von Öffnungen (59), die in Umfangrichtung im Abstand voneinander in der Pyrolysezone (34) an einer dritten longitudinalen Position in Bezug auf die longitudinale Achse des Reaktors angeordnet sind.

3. Reaktor nach Anspruch 2, wobei die dritte longitudinale Position sich in einem Abstand von etwa 4 Halsdurchmessern von der im allgemeinen ringförmigen Wand (42) befindet.

4. Reaktor nach Anspruch 2 oder 3, umfassend einen vierten Satz von Öffnungen (59), die in Umfangrichtung im Abstand voneinander an einer vierten longitudinalen Position in Bezug auf die longitudinale Achse des Reaktors angeordnet sind, wobei dieser vierte Satz von Öffnungen (59) sich in der konvergierenden Zone (15) stromaufwärts vom ersten Satz von Öffnungen (59) befindet.

5. Reaktor nach Anspruch 4, wobei der Abstand, der den vierten Satz von Öffnungen vom dritten Satz von Öffnungen trennt, nicht grösser als etwa 6 Reaktorhalsdurchmesser ist.

6. Reaktor nach Anspruch 5, wobei der Abstand, der den vierten Satz von Öffnungen vom dritten Satz von Öffnungen trennt, im Bereich von 3 bis 6 Reaktorhalsdurchmessern liegt.

7. Reaktor nach einem der Ansprüche 2 bis 6, umfassend:

mindestens eine Einsatzmaterial-Injektionsvorrichtung (62) in einer Öffnung (59) an jeder von mindestens 2 der genannten longitudinalen Positionen;

eine Quelle für kohlenstoffhaltiges Einsatzmaterial; und

Leitungsmittel, die die Quelle für das kohlenstoffhaltige Einsatzmaterial mit den Einsatzmaterial-Injektionsvorrichtungen verbinden.

8. Reaktor nach Anspruch 7, wobei die Einsatzmaterial-Injektionsvorrichtungen jeweils Mittel zur Abgabe eines kohärenten Strahls an Einsatzmaterial umfasst.

9. Reaktor nach Anspruch 7, wobei die Einsatzmaterial-Injektionsvorrichtungen jeweils Mittel zur Abgabe eines Sprühnebels an Einsatzmaterial in einem konisch geformten Muster aufweisen.

10. Reaktor nach Anspruch 9, wobei die Einsatzmaterial-Injektionsvorrichtungen jeweils Mittel umfassen, wodurch das konisch geformte Muster einen Öffnungswinkel im Bereich von 30 bis 120° aufweisen.

11. Verfahren zur Herstellung von Russ, wobei heisse Verbrennungsgase in der Verbrennungszone (12) des Reaktors nach einem der Ansprüche 2 bis 10 gebildet werden;

diese heissen Verbrennungsgase aus der Verbrennungszone (12) durch die konvergierende Zone (15) und den Reaktorhals (22) in die Pyrolysezone (34) strömen;

und ein kohlenstoffhaltiges Einsatzmaterial in die heissen Verbrennungsgase mittels Einsatzmaterial-Injektionsvorrichtungen (62), die selektiv mittels der Öffnungen (59) angeordnet sind, an mindestens 2 der genannten longitudinalen Positionen zugeführt wird;

mit der Massgabe, dass das Einsatzmaterial nicht durch die Öffnungen an der ersten und zweiten Position als alleinige Einsatzmaterial-Quelle zugeführt wird.

12. Verfahren nach Anspruch 11, dadurch gekennzeichnet, dass das Einsatzmaterial durch Einsatzmaterial-Injektionsvorrichtungen in Öffnungen an der zweiten und der dritten longitudinalen Position zugeführt wird.

13. Verfahren nach Anspruch 11 oder 12, wobei das Einsatzmaterial durch Einsatzmaterial-Injektionsvorrichtungen in Öffnungen an der ersten und der dritten longitudinalen Position zugeführt wird.

14. Verfahren nach Anspruch 11 unter Verwendung einer Vorrichtung nach Anspruch 4 oder nach einem der auf den Anspruch 4 zurückbezogenen Ansprüche, wobei das Einsatzmaterial durch Einsatzmaterial-Injektionsvorrichtungenin Öffnungen an der vierten, ersten und zweiten longitudinalen Position zugeführt wird.

15. Verfahren nach Anspruch 11 unter Verwendung einer Vorrichtung nach Anspruch 4 oder nach einem der auf den Anspruch 4 zurückbezogenen Ansprüche, wobei das Einsatzmaterial durch Einsatzmaterial-Injektionsvorrichtungenin Öffnungen an der vierten, zweiten und dritten longitudinalen Position zugeführt wird.

16. Verfahren nach einem der Ansprüche 11 bis 15, wobei das kohlenstoffhaltige Material an mindestens einer der beiden longitudinalen Positionen in der konvergierenden Zone und an mindestens einer Stelle des Reaktorhalses und der Pyrolysezone gespritzt wird.

17. Verfahren nach einem der Ansprüche 11 bis 15, wobei das kohlenstoffhaltige Einsatzmaterial in im allgemeinen radialer Richtung nach innen in die heissen Verbrennungsgase von der Seitenwand im Anschluss jeweils an die konvergierende Zone, die Reaktorzone und die Pyrolysezone gesprüht wird.

18. Verfahren nach einem der Ansprüche 11 bis 17, wobei das Einsatzmaterial in die heissen Verbrennungsgase über einen longitudinalen Abstand im Bereich von 2 bis 6 Reaktorhalsdurchmessern hinweg zugeführt wird.

FIG. I

EP 0 206 315 B1

FIG. 2

FIG. 3

EP 0 206 315 B1